# EUROPEAN PATENT APPLICATION

(11) **EP 2 800 044 A1**
(43) Date of publication of application: **05.11.2014**
(21) Application number: 12862352.7
(22) Date of filing: 30.11.2012
(51) Int. Cl.: G06Q 30/02, H04B 5/02

(54) **MOBILE VAS ISSUING SYSTEM AND METHOD**

(30) Priority: 30.12.2011 US 201161581853 P
(71) Applicant: SK C&C Co., Ltd., Seongnam-si, Gyeonggi-do 463-844 (KR)
(72) Inventor: KWON, Yong Sung, Alpharetta, Georgia 30004 (US); ZHU, Kevin, Marietta, Georgia 30068 (US)
(74) Representative: Walaski, Jan Filip
(86) International application number: PCT/KR2012/010319
(87) International publication number: WO 2013/100416

(57) **Abstract**

A system and method for issuing a mobile VAS is provided. The method for issuing the mobile VAS generates a mobile VAS based on a user attribute grasped from user information of a mobile terminal, and issues the mobile VAS. Accordingly, a customized VAS can be issued effectively.

## Description

### Technical Field

The present invention relates to a system and method for delivering a Value Added Service (VAS) (e.g., coupons, gift cards, incentives, etc.) to a mobile terminal by using short-range communication technology such as Near Field Communication (NFC).

### Background Art

Conventionally, a customer may collect coupons and other incentives (collectively referred to as "coupons") that are delivered by mail, email, text messages, circulars, print outs provided during a purchase of groceries or other goods, and the like.

Typically, the customer may keep expiration dates of various coupons, and any other conditions that may be applicable for coupon redemption. However, since these coupons have to be collected and managed one by one, the customer should spend some effort and time to take advantage of benefits provided by these respective coupons.

In addition, if these coupons are forgotten at the time of redemption and/or unused prior to expiration date, the customer may not reap any benefit.

Further, since it may be difficult to obtain/keep large number of coupons for different merchants and retailers, customers may opt to collect only a small amount of coupon collection, if at all. In this case, manufacturers and merchants may be wasting their resources by distributing to customers who may ignore their circulars and/or coupons.

### Disclosure

### Technical Problem

An aspect of the present invention is to solve at least the above-mentioned problems and/or disadvantages and to provide at least the advantages described below. Accordingly, an aspect of the present invention is to provide a system and method for issuing a VAS.

Another aspect of the present invention is to provide a method and system for generating and issuing a mobile VAS based on a user attribute which is grasped from user information of a mobile terminal.

### Technical Solution

Additional features of the invention will be set forth in the description which follows, and in part will be apparent from the description.

According to an aspect of an exemplary embodiment, there is provided a point-of-sale (POS) system including: an NFC reader, an NFC reader interface to receive a radio frequency (RF) signal, a rule engine to determine whether to transmit a VAS to a requesting mobile terminal, a manager to determine whether the requesting mobile terminal is compatible with the POS system, and an external system interface to interact with a third party server.

According to an aspect of another exemplary embodiment, there is provided a method for delivering a VAS, the method including: establishing NFC with a POS system, receiving a request to transmit a customer related information, retrieving customer related information from a Secure Element (SE), receiving a VAS from the POS system, and storing the VAS in the SE.

According to an aspect of another exemplary embodiment, there is provided a method for issuing a mobile Value Added Service (VAS), the method including: receiving user information from a mobile terminal; generating a mobile VAS based on a user attribute grasped from the user information; and issuing the generated mobile VAS to the mobile terminal.

The user information may include at least one of a user ID and a phone number for identifying a user of the mobile terminal, and the user attribute may include at least one of user's sex, age, financial status, marital status, preference, and historical purchasing habit, which correspond to the user information and are stored.

The user attribute may further include an issuance condition of the mobile VAS, and the issuance condition of the mobile VAS may include at least one of a service target, a service content and a service period.

The method may further include initiating communication with the mobile terminal when the mobile terminal approaches, and the receiving may be performed after the communication is initiated.

The initiating the communication may be performed when a stimulus is applied to the mobile terminal by the user.

The method may further include: receiving a mobile VAS list from the mobile terminal; using at least one of mobile VASs enumerated in the mobile VAS list for a purchased product; and transmitting a result of the use of the mobile VAS to the mobile terminal.

The using may include: retrieving an available mobile VAS from among the mobile VASs enumerated in the mobile VAS list; when a single available mobile VAS is retrieved, using the retrieved mobile VAS for the purchased product; and when a plurality of available VASs are retrieved, using, for the purchased product, a mobile VAS selected from among the retrieved mobile VASs by the user.

According to an aspect of another exemplary embodiment, there is provided a system for issuing a mobile VAS, the system including: a communication unit configured to receive user information from a mobile terminal; and a terminal configured to generate a mobile VAS based on a user attribute grasped from the user information, and issue the generated mobile VAS to the mobile terminal via the communication unit.

The system for issuing the mobile VSA may be installed in a shop as a Point-Of-Sale (POS) device or may be installed in a public place.

According to an aspect of another exemplary embodiment, there is provided a method for issuing a mobile VAS, the method including: transmitting by a mobile terminal, user information to a system; receiving by the mobile terminal, a mobile VAS which is generated by the system based on a user attribute grasped from the user information from the system; and storing the received mobile VAS.

The user information may include at least one of a user ID and a phone number for identifying a user of the mobile terminal, and the user attribute may include at least one of user's sex, age, financial status, marital status, preference, and historical purchasing habit, which correspond to the user information and are stored.

The user attribute may further include an issuance condition of the mobile VAS, and the issuance condition of the mobile VAS may include at least one of a service target, a service content and a service period.

The method may further include initiating by the mobile terminal, communication with the system when the mobile terminal approaches, and the transmitting may be performed after the communication is initiated.

The initiating the communication may be performed when a stimulus is applied to the mobile terminal by the user.

The method may further include: transmitting by the mobile terminal, a mobile VAS list to the system; receiving by the mobile terminal, a result of using at least one of mobile VASs enumerated in the mobile VAS list for a purchased product by the system from the system; and reflecting by the mobile terminal, the result.

According to an aspect of another exemplary embodiment, there is provided a mobile terminal including: a communication unit configured to transmit user information to a system; a processor configured to receive a mobile VAS which is generated by the system based on a user attribute grasped from the user information from the system via the communication unit; and a storage configured to store the mobile VAS.

### Advantageous Effects

According to the exemplary embodiments described above, since a mobile VAS is generated based on user attributes grasped from user information of the mobile terminal and issued, a customized VAS can be issued effectively.

In addition, since a VAS available to a purchased product is automatically retrieved and used, user's convenience in using the VAS can be improved.

It is to be understood that both the foregoing general description and the following detailed description are exemplary and explanatory and are intended to provide further explanation of the invention as claimed. Other features and aspects will be apparent from the following detailed description, the drawings, and the claims.

### Description of Drawings

FIG. 1 is a block diagram illustrating a mobile VAS issuance system according to an exemplary embodiment of the present invention;
FIG. 2 is a block diagram illustrating a mobile VAS issuance point-of-sale (POS) system according to an exemplary embodiment of the present invention;
FIG. 3 is a block diagram illustrating a mobile terminal according to an exemplary embodiment of the present invention;
FIG. 4 is a flowchart illustrating a mobile VAS issuance process according to an exemplary embodiment of the present invention;
FIG. 5 is a view to illustrate a method for issuing a mobile VAS according to an exemplary embodiment of the present invention; and
FIG. 6 is a view to illustrate a method for using a mobile VAS according to an exemplary embodiment of the present invention.

### Best Mode

Reference will now be made in detail to the embodiment of the present general inventive concept, examples of which are illustrated in the accompanying drawings, wherein like reference numerals refer to the like elements throughout. The embodiment is described below in order to explain the present general inventive concept by referring to the drawings.

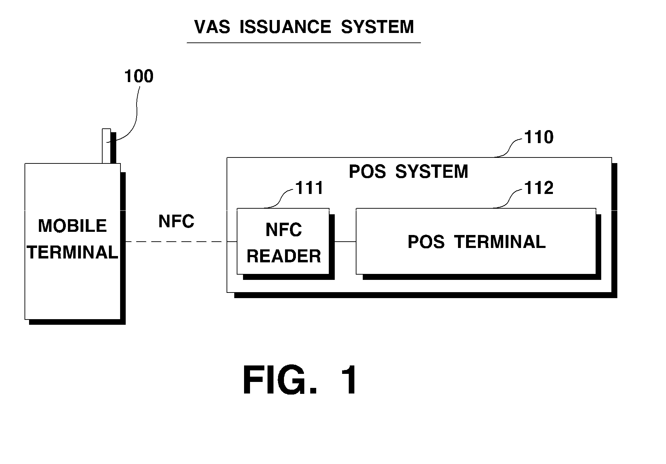

FIG. 1 is a block diagram illustrating a mobile Value Added Service (VAS) issuance system according to an exemplary embodiment of the present invention.

The mobile VAS issuance system is a system for issuing a mobile VAS (e.g., coupons, gift cards, special offers, frequent buyer membership, and the like) to one or more mobile terminals. The mobile VAS is transmitted in an electronic data format, which may be received/stored by the mobile terminals.

As shown in FIG. 1, the mobile VAS issuance system includes a mobile terminal 100 and a point-of-sale (POS) system 110.

The POS system 110 may further include an NFC reader 111 and a POS terminal 112. While the POS system 110 is illustrated as Radio Frequency (RF) communicating with the NFC reader 111 in FIG. 1, the RF communication is not limited to NFC and may be substituted with other communication schemes.

The mobile terminal 100 may include, without limitation, a mobile phone, a Personal Digital Assistant (PDA), a mobile computing device, and the like. In addition, the mobile terminal 100 may include a Secure Element (SE) to store payment information, purchase history, personal preferences, and the like. In the present exemplary embodiment, when the mobile terminal 100 receives a mobile VAS, the received mobile VAS may be stored in the SE or an internal memory of the mobile terminal 100.

In addition, the mobile terminal 100 may also include a NFC chip or other kinds of contactless transceivers to perform transactions via RF or other wireless communication schemes.

The POS system 110 is a system including hardware and software for performing financial transactions associated with goods purchased by customers. The POS system 110 may facilitate the purchase process by means of a salesperson accessible interface or an automated customer accessible interface. The POS system 110 may further include a weight scale, an integrated credit card processing system, a signature capture device, a customer PIN input pad, as well as the NFC reader 111.

The NFC reader 111 may read data transmitted from the mobile terminal 100. In the present exemplary embodiment, the mobile terminal 100 may transmit a list of goods that were selected for purchase by using NFC technology, as well as applicable coupon and/or reward membership information. In addition, the NFC reader 111 may read financial information such as transaction information transmitted from the mobile terminal 100.

The POS system 110 generates and prints receipts after the customer has completed his or her purchase transaction. In addition, the POS system 110 may also create and print paper coupons for the customer.

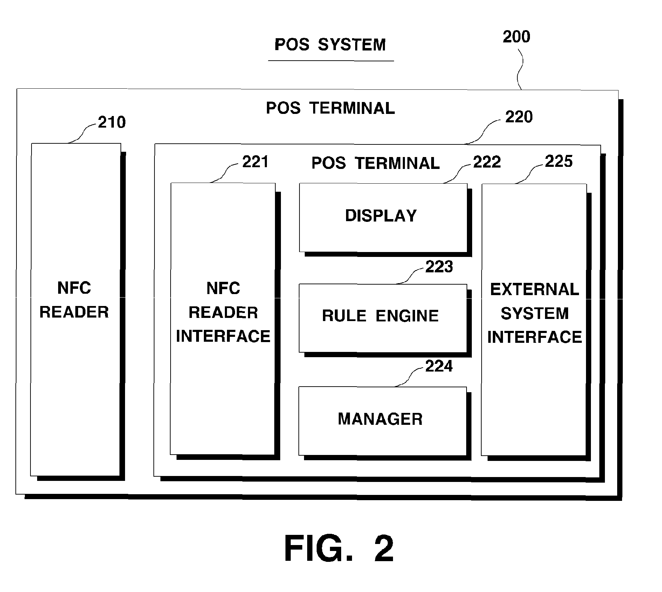

FIG. 2 is a block diagram illustrating a POS system for issuing a mobile VAS according to another exemplary embodiment of the present invention.

As shown in FIG. 2, the POS system 200 includes an NFC reader 210, NFC reader interface 221, a display 222, a rule engine 223, a manager 224, and an external system interface 225.

The NFC reader 210 may receive RF or NFC signals transmitted by the mobile terminal 100 or other terminals. Information related to goods, payment, coupons, gift cards, and the like may be received by the NFC reader 210. However, the NFC reader 210 is not limited to the RF or NFC scheme, and may adopt Bluetooth®, Infrared Data Association (IrDA), and the like.

The display 222 may display information received by the NFC reader 210. In the present exemplary embodiment, a list of goods purchased along with their quantities and price may be displayed on the display 222. In addition, payment selection and resulting transactions may also be displayed.

The rule engine 223 may manage promotional events, such as weekly sales or more targeted advertising based on a customer's preferences and/or historical purchasing habits. For example, the rule engine 223 may determine to apply a 5% off discount for all canned merchandise for a retailer at location A, for the first week of December, 2011. In this case, in order to apply the 5% discount to a purchase transaction for the first week of December, 2011, the rule engine 223 may determine the date of the purchase, location of the purchase, and whether or not the selected merchandise is canned merchandise.

In addition, the rule engine 223 may manage VAS issuance for distribution to customers falling within one or more criteria. For example, the rule engine 223 may provide a customized VAS based on the customer's various attributes, including age, sex, ethnicity, financial status, marital status, personal preferences and the like.

In addition, the rule engine 223 may provide a customized VAS based on the customer's purchasing habits. For example, when the rule engine 223 determines that the customer is a frequent purchaser of coffee products, the rule engine 223 may determine to issue a 50% off coupon for a new brand of premium coffee. In another example, when the rule engine 223 determines that the customer is a male, the rule engine 223 may determine to issue a discount coupon for male hygienic products while omitting female targeted products.

Although not illustrated, the rule engine 223 may further include a VAS manager, an issuance rule engine, and a promotion manager. The VAS manager manages VASs such as coupons, gift cards, tickets, and the like. The issuance rule engine generates/provides parameters for issuing the mobile VAS. The parameters are generated based on customer's shopping history, current purchase transaction, customer's personal information (e.g., sex, age, ethnicity, birthday and the like), customer's preferences, and the like. The promotion manager manages terms of the promotion, such as expiration dates, number of uses, limitation on number of products, product identification, brand identification, and the like.

The manager 224 manages a list of devices that the POS system 200 may interact with. For example, the manager 224 may interact only with mobile terminals with specific specifications, operating systems, and/or hardware.

The external system interface 225 may transmit data received from the mobile terminal to a main server for processing. For example, the external system interface 225 may transmit payment information transmitted by the customer to a financial institution server for processing. In addition, the external system interface 225 may also receive results of the financial transaction from the financial institution to complete the purchase transaction for the respective customers.

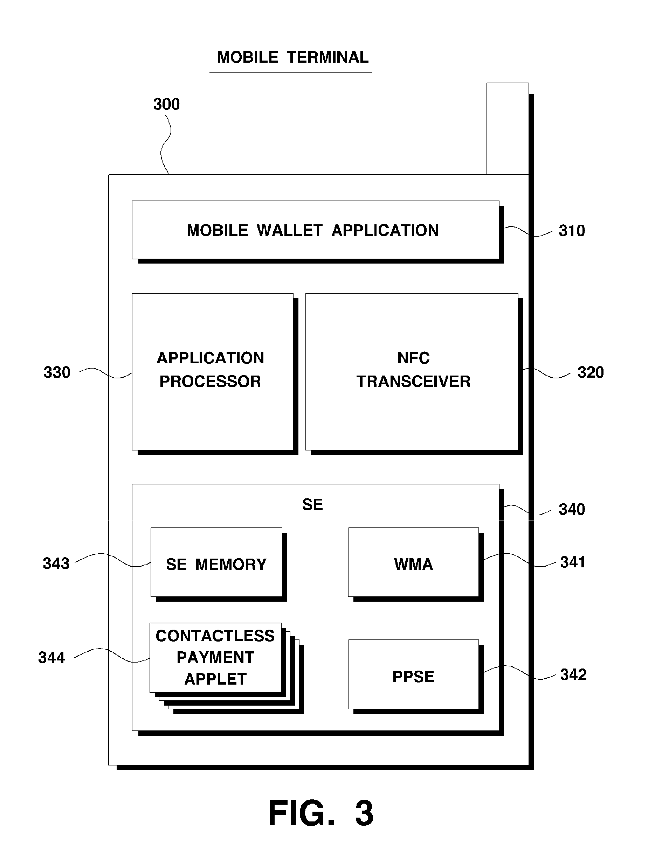

FIG. 3 is a block diagram illustrating a mobile terminal according to another exemplary embodiment of the present invention.

As shown in FIG. 3, the mobile terminal 300 includes a mobile wallet application 310, a NFC transceiver 320, an application processor 330, and a Secure Element (SE) 340. The SE 340 may include a Wallet Management Applet (WMA) 341, a Payment Procedure Secure Element (PPSE) 342, a SE memory 343, and a contactless payment applet 344.

The mobile wallet application 310 may include one or more widgets, which may refer to a form of payment, a gift card, a coupon, a reward card membership, a transportation pass, and the like. In addition, the mobile wallet application 310 may provide an interface to a user of the mobile terminal 300, to view, select, and/or manipulate the information stored therein.

The NFC transceiver 320 transmits information from the mobile terminal to a corresponding NFC terminal, such as a POS system equipped with a NFC reader. The NFC refers to a communication scheme for data exchange between two terminals in proximity to each other. Accordingly, payment information and other data may be exchanged between two terminals using NFC technology.

The application processor 330 may process applications according to a stimulus by the user. For example, when the mobile terminal 300 equipped with the NFC transceiver 320 is waved in front of a POS terminal, the POS system may transmit a signal to the mobile terminal 300 via the NFC transceiver 320 to activate the mobile wallet application 310 to begin the payment process.

The WMA 341 may refer to a software application that resides within the SE 340 to manage account information related to the contactless payment applet 344, which may be inaccessible by the user. During a financial transaction, the mobile terminal 300 may transmit account information related to the contactless payment applet 344 to the POS system to complete a purchase transaction. The PPSE 342 may store application identification and label of the contactless payment applet 344 stored in the SE 340.

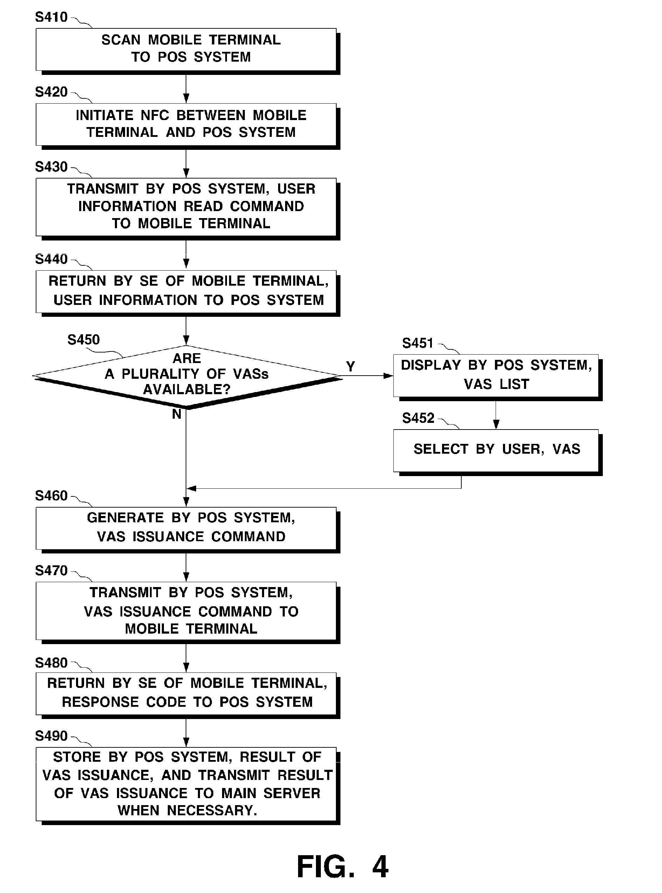

FIG. 4 is a flowchart illustrating a mobile VAS issuance process according to another exemplary embodiment of the present invention.

In operation 410, the customer scans the mobile terminal to the POS system after goods have been scanned for purchase at the POS system. For example, when the customer places the mobile terminal near to the POS system or taps or waves the mobile terminal in that state, the mobile terminal may transmit an RF signal via a NFC transceiver. In response to this, the POS system may respond with a corresponding RF signal via an NFC reader interface.

In operation 420, the mobile terminal initiates NFC with the POS system. The POS system may receive the RF or NFC signal transmitted by the mobile terminal, and the POS system may transmit a RF or NFC signal as a response to initiate the NFC.

In operation 430, the POS system transmits a user information read command to the mobile terminal. The user information may include, without limitation, contact information, payment information, mobile terminal information, previous purchase transaction information, stored coupon information, and the like.

When there is a coupon corresponding to the selected goods, the POS system may retrieve corresponding coupon information from the mobile terminal to redeem the coupon. In addition, the POS system may verify that the coupon meets criteria set forth for redeeming the coupons (e.g., verify if the coupon has not yet expired). When the coupon meets the criteria set forth for redemption, the coupons may automatically be redeemed. Alternatively, the customer may be notified of the applicable coupons in advance and request customer use command input for applying the respective coupons. The applicable VAS may include coupons as illustrated above, but is not limited thereto.

In operation 440, the user information is read from the SE of the mobile terminal and returned to the POS system. While the method is described as the POS system reading the user information from the SE of the mobile terminal, the method is not limited thereto. The POS system may read the user information from a general (internal) memory of the mobile terminal.

Although not illustrated, the mobile terminal may alternatively transmit relevant user information to the POS system. In addition, the mobile terminal may transmit some user information to the POS system while the POS system retrieves other user information for processing.

In operation 450, the POS system determines whether multiple VASs are available to the user of the mobile terminal. When there is more than one VAS available, the process proceeds to operation 451. In operation 451, the POS system displays a list of VASs the customer may select from. The customer (user of the mobile terminal) selects one or more VASs, and the process proceeds to operation 460.

When, at operation 450, the POS system determines there is only one VAS that is available to the user of the mobile terminal, the process proceeds to operation 460.

While it is not illustrated, the mobile VAS may be transmitted directly to the mobile terminal of the customer without receiving selection information. The mobile VAS may be transmitted according to preset rules set by the customers (e.g., coupons of 15% or higher, coupons for baby products, and the like), or based on system conditions (e.g., only the first five coupons are provided to the customer).

In addition, the mobile VAS may be saved in the mobile terminal according to its categorization. For example, the mobile VAS may be saved based on the mobile VAS type, such as coupons, gift cards, voucher for free samples and the like. In addition, the mobile VAS may be stored based on the goods it relates to, such as clothing, groceries, durable goods, and the like. In addition, the mobile VAS may also be stored generally and retrieved, which may be identified based on the name of the goods it relates to, barcode, serial number, alphanumeric string, and/or other identifying information.

For example, an electronic coupon for a 16 ounce Brand X coffee with an expiration date of December 31, 2012 may be received from the POS system during a previous transaction at store A. In this case, when the user goes shopping and selects the 16 ounce Brand X coffee for purchase, scans the coffee at the POS system and attempts to pay for the scanned good with an NFC enabled mobile terminal, the stored coupon may be retrieved for redemption based on the scanned good or coffee in this case.

More specifically, when the NFC enabled mobile terminal is scanned by waving or tapping the POS system, NFC may be initiated between the mobile terminal and the POS system. The POS system may retrieve or receive relevant user information, including applicable VASs (e.g., gift cards, coupons, and other promotion information), from the mobile terminal. The POS system may then go through the list of VASs received from the mobile terminal, and determines whether one or more VASs (a 16 ounce Brand X coffee, in this case) applies to the scanned goods. When the POS system determines that there is a coupon for the 16 ounce Brand X coffee, the POS system may determine whether any restriction applies, such as an expiration date or limits on quantity. Once it is determined that no restrictions are applicable, the respective coupon may be applied to the purchase.

In operation 460, the POS system generates a VAS issuance command. The VAS issuance command may be in an Application Protocol Data Unit (APDU) format so that the mobile VAS may be provisioned or stored in the SE of the mobile terminal. Alternatively, the VAS issuance command may be in various forms to allow transmission and storage in a general memory of the mobile terminal.

In operation 470, the POS system transmits the VAS issuance command to the mobile terminal.

In operation 480, when the mobile terminal receives the issued VAS, the SE of the mobile terminal returns a response to the POS system. When the issued VAS is received, the mobile terminal transmits the mobile VAS to the SE for secure storage.

In operation 490, the POS system receives the result of the mobile VAS issuance from the mobile terminal and stores the result. In addition, the POS system may transmit the result to a main server for storage.

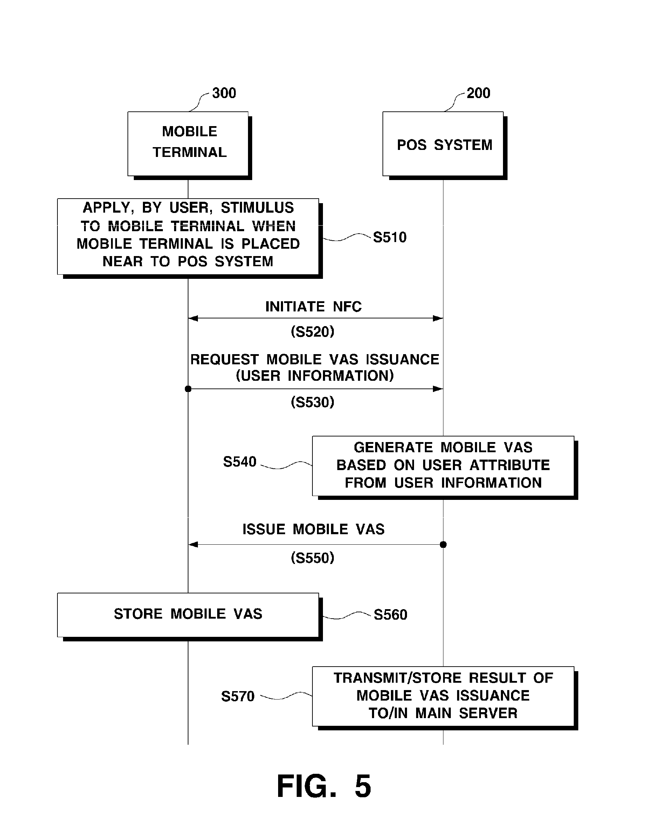

FIG. 5 is a view to illustrate a method for issuing a mobile VAS according to another exemplary embodiment of the present invention.

As shown in FIG. 5, when the mobile terminal 300 is placed near to the NFC reader 210 of the POS system 200 and a stimulus is applied to the mobile terminal 300 by the user (S510), NFC is initiated between the mobile terminal 300 and the POS system 200 (S520).

In operation 510, the stimulus may be applied to the mobile terminal 300 by the user waving or tapping the mobile terminal 300. The stimulus to the mobile terminal 300 may be interpreted as a user's intention to receive issuance of a mobile VAS.

The application processor 330 of the mobile terminal 300 which recognizes the stimulus executes the mobile wallet application 310, and thus RF signals are exchanged between the NFC transceiver 320 of the mobile terminal 300 and the NFC reader 210 of the POS system 200 and NFC is initiated between the mobile terminal 300 and the POS system 200.

When the NFC is initiated, the mobile terminal 300 requests the POS system 200 to issue a mobile VAS while transmitting user information to the POS system 200 (S530). The user information transmitted from the mobile terminal 300 to the POS system 200 in operation S530 may be a user ID or a phone number of the mobile terminal 300 as information for identifying the user.

The user information may be stored in the SE 340 of the mobile terminal 300 or may be stored in the general (internal) memory (not shown) of the mobile terminal 300.

The mobile VAS is a mobile service which is additionally provided in addition a mobile payment service, and may include coupons, points, gift cards, special offers, frequent user membership, and the like.

The POS system 200 generates a mobile VAS based on user attributes which are grasped from the user information received in operation S530 (S540). The user attributes correspond to the user information and are stored in the POS system 200.

When the user information is a phone number, the POS system 200 may store user attributes corresponding to a phone number "123-4567-8901" and user attributes corresponding to a phone number "987-6543-2109"

The user attribute includes sex, age, financial status, marital status, personal preference, historical purchasing habit, and the like, and the historical purchasing habit may be updated on a real time basis every time a purchase transaction is performed.

Since the mobile VAS is generated based on the user attributes, the POS system 200 may generate a customized mobile VAS. For example, 1) when it is determined the user is a middle-aged male based on the user attributes, the POS system 200 generates a mobile VAS for goods used by the middle-aged males, 2) when it is determined that the user is much interested in baby products based on the personal preference, the POS system 200 generates a mobile VAS for baby products, and 3) when it is determined that the user has frequently purchased coffee products in the past based on the historical purchasing habit, the POS system 200 generates a mobile VAS for coffee.

The user attribute may further include a mobile VAS issuance condition. The mobile VAS issuance condition may be not for the user, but for the mobile VAS, and includes a service target (for example, an item), service contents (for example, a discount rate, a discount amount), and a service period (for example, an effective period).

For example, when the mobile VAS issuance condition is a baby product, the POS system 200 does not generate a mobile VAS for items other than the baby products. In another example, when a discount rate is set to at least 10%, a discount amount is set to at least $1, and an effective period is set to at least 30 days as the mobile VAS issuance condition, the POS system 200 does not generate a mobile VAS which offers a discount less than 10% or less than $1 and a mobile VAS which offers an effective period less than 30 days.

Thereafter, the POS system 200 issues the mobile VAS generated in operation S540 to the mobile terminal 300 (S550), and the mobile terminal 300 stores the mobile VAS issued in operation S550 in the SE 340 (S560).

The mobile VAS may be stored in the general (internal) memory of the mobile terminal 300 rather than the SE 340. In particular, when the mobile VAS does not require security, the storage in the general (internal) memory rather than the SE 340 may be more appropriate.

The POS system 200 may transmit the result of the mobile VAS issuance to the main server and store the result in the main server (S570). The result of the mobile VAS issuance transmitted/stored to/in the main server in operation S570 includes information on the issued mobile VAS and information of the user who receives the mobile VAS.

The process of issuing the mobile VAS according to exemplary embodiments have been described up to now. In the above-described exemplary embodiments, it is the POS system 200 that issues the mobile VAS. However, this is merely an example and variations can be made.

A kiosk installed in a shop rather than the POS system 200 may issue the mobile VAS. Furthermore, the kiosk for issuing the mobile VAS may be installed out of the store. For example, the technical idea of the present invention can be applied when the kiosk is installed in a subway station, a bus station, or other public places.

In addition, in the above-described exemplary embodiments, the mobile terminal 300 requests the POS system 200 to issue the mobile VAS when the NFC is initiated. However, variations can be made. For example, when the NFC is initiated, the POS system 200 may request the user information from the mobile terminal 300 to issue the mobile VAS without receiving the request from the mobile terminal 300.

Furthermore, there is no restriction on when the mobile VAS is issued. The POS system 200 may issue the mobile VAS to the mobile terminal 300 of the customer prior the customer going shopping, and also, may issue the mobile VAS of the mobile terminal 300 of the customer when the customer makes a payment after selecting the goods.

Furthermore, a mobile VAS common to all customers, rather than the customized mobile VAS, may be issued. In this case, the transmitting/requesting the user information may be omitted.

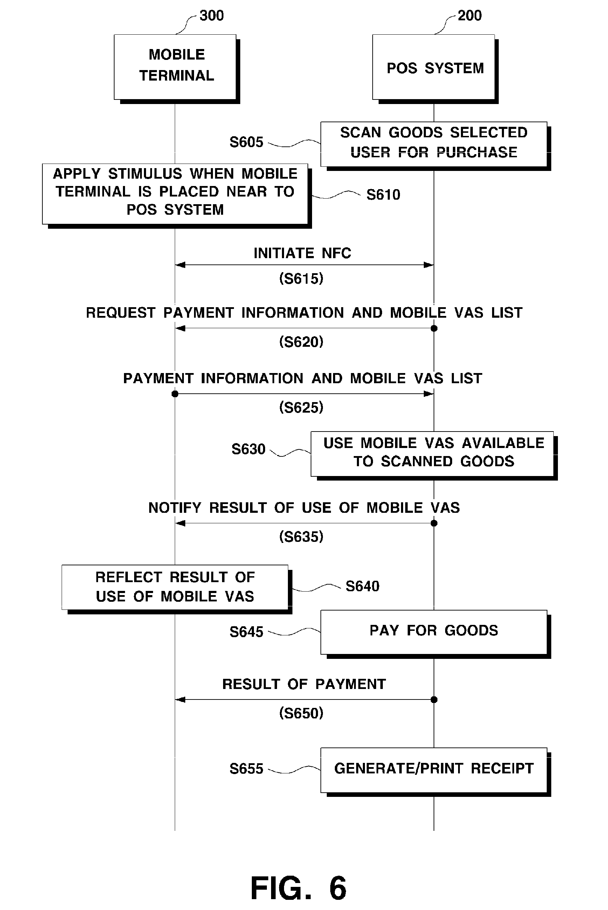

FIG. 6 is a view to illustrate a method for using a mobile VAS according to another exemplary embodiment of the present invention.

When goods that the user selected are scanned by the POS system 200 (S605) and a stimulus is applied to the mobile terminal 300 by the user with the mobile terminal 300 being placed near to the NFC reader 210 of the POS system 200 (S610), NFC is initiated between the mobile terminal 300 and the POS system 200 (S615).

In operation S610, the stimulus is applied to the mobile terminal 300 in the same way as in FIG. 5. The stimulus to the mobile terminal 300 may be interpreted as a user's intention to use any available mobile VAS automatically when making a payment for the goods.

When the NFC is initiated, the POS system 200 requests a mobile VAS list from the mobile terminal 300 along with payment information (S620), and the mobile terminal 300 transmits the payment information and the mobile VAS list to the POS system 200 in response to the request (S625).

Thereafter, the POS system 200 uses mobile VASs available to the goods scanned in operation S605 from among the mobile VASs enumerated in the mobile VAS list received in operation S625 (S630).

For operation S630, the POS system 200 retrieves the mobile VASs available to the goods scanned in operation S605 from the mobile VAS list received in operation S625 one by one.

When there is one mobile VAS available, the POS system 200 uses the retrieved mobile VAS for the goods.

However, when there are two or more mobile VASs available, the POS system 200 displays the retrieved mobile VASs on the display 222 and request the user to select, and uses the mobile VAS selected by the user for the goods.

When there is one mobile VAS available, the POS system 200 may request from the user a confirmation on whether the mobile VAS is used or not through the display 222 prior to using the mobile VAS in operation S630.

Thereafter, the POS system 200 notifies the result of the use of the mobile VAS in operation S630 to the mobile terminal 300 (S635), and the mobile terminal 300 reflects the result of the use of the mobile VAS (S640). Specifically, in operation S640, the mobile terminal 300 may delete the mobile VAS which is notified as having been used in operation S635 from the SE 340 (or general memory).

When the mobile VAS is used and the result of the use of the mobile VAS is notified, the POS system 200 makes a payment for the goods (S645). In operation S645, the payment information received in operation S625 may be used for the payment.

When the payment is completed in operation S645, the POS system 200 transmits the result of the payment to the mobile terminal 300 (S650), and generates and prints a receipt (S655).

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for issuing a mobile Value Added Service (VAS), the method comprising:
receiving user information from a mobile terminal;
generating a mobile VAS based on a user attribute grasped from the user information; and
issuing the generated mobile VAS to the mobile terminal.

2. The method of claim 1, wherein the user information comprises at least one of a user ID and a phone number for identifying a user of the mobile terminal, and
wherein the user attribute comprises at least one of user's sex, age, financial status, marital status, preference, and historical purchasing habit, which correspond to the user information and are stored.

3. The method of claim 2, wherein the user attribute further comprises an issuance condition of the mobile VAS,
wherein the issuance condition of the mobile VAS comprises at least one of a service target, a service content and a service period.

4. The method of claim 1, further comprising initiating communication with the mobile terminal when the mobile terminal approaches, and
wherein the receiving is performed after the communication is initiated.

5. The method of claim 4, wherein the initiating the communication is performed when a stimulus is applied to the mobile terminal by the user.

6. The method of claim 1, further comprising:
receiving a mobile VAS list from the mobile terminal;
using at least one of mobile VASs enumerated in the mobile VAS list for a purchased product; and
transmitting a result of the use of the mobile VAS to the mobile terminal.

7. The method of claim 5, wherein the using comprises:
retrieving an available mobile VAS from among the mobile VASs enumerated in the mobile VAS list;
when a single available mobile VAS is retrieved, using the retrieved mobile VAS for the purchased product; and
when a plurality of available VASs are retrieved, using, for the purchased product, a mobile VAS selected from among the retrieved mobile VASs by the user.

8. A system for issuing a mobile VAS, the system comprising:
a communication unit configured to receive user information from a mobile terminal; and
a terminal configured to generate a mobile VAS based on a user attribute grasped from the user information, and issue the generated mobile VAS to the mobile terminal via the communication unit.

9. The system of claim 8, wherein the system for issuing the mobile VSA is installed in a shop as a Point-Of-Sale (POS) device or is installed in a public place.

10. A method for issuing a mobile VAS, the method comprising:
transmitting by a mobile terminal, user information to a system;
receiving by the mobile terminal, a mobile VAS which is generated by the system based on a user attribute grasped from the user information from the system; and
storing the received mobile VAS.

11. The method of claim 10, wherein the user information comprises at least one of a user ID and a phone number for identifying a user of the mobile terminal, and
wherein the user attribute comprises at least one of user's sex, age, financial status, marital status, preference, and historical purchasing habit, which correspond to the user information and are stored.

12. The method of claim 11, wherein the user attribute further comprises an issuance condition of the mobile VAS,
wherein the issuance condition of the mobile VAS comprises at least one of a service target, a service content and a service period.

13. The method of claim 10, further comprising initiating by the mobile terminal, communication with the system when the mobile terminal approaches, and
wherein the transmitting is performed after the communication is initiated.

14. The method of claim 13, wherein the initiating the communication is performed when a stimulus is applied to the mobile terminal by the user.

15. The method of claim 10, further comprising:
transmitting by the mobile terminal, a mobile VAS list to the system;
receiving by the mobile terminal, a result of using at least one of mobile VASs enumerated in the mobile VAS list for a purchased product by the system from the system; and
reflecting by the mobile terminal, the result.

16. A mobile terminal comprising:
a communication unit configured to transmit user information to a system;
a processor configured to receive a mobile VAS which is generated by the system based on a user attribute grasped from the user information from the system via the communication unit; and
a storage configured to store the mobile VAS.
